# EUROPEAN PATENT APPLICATION

(11) **EP 3 952 105 A1**
(43) Date of publication of application: **09.02.2022**
(21) Application number: 20776922.5
(22) Date of filing: 27.03.2020
(51) Int. Cl.: H02S 40/12, H02S 20/10

(54) **SOLAR CELL STRUCTURE AND SNOW BLOCKING CONTROL METHOD FOR SOLAR CELL STRUCTURE**

(30) Priority: 28.03.2019 JP 2019065070
(71) Applicant: NITTO DENKO CORPORATION, Ibaraki-shi Osaka 567-8680 (JP)
(72) Inventor: EGUCHI Kenichi, Ibaraki-shi, Osaka 567-8680 (JP); FUJITA Hiroyuki, Ibaraki-shi, Osaka 567-8680 (JP); SATO Masaaki, Ibaraki-shi, Osaka 567-8680 (JP)
(74) Representative: Gill Jennings & Every LLP
(86) International application number: PCT/JP2020/014342
(87) International publication number: WO 2020/196894

(57) **Abstract**

A solar cell structure including panel structure comprising a solar cell panel and a mount configured to support the panel structure in an inclined state, in which the mount has a support surface that supports the panel structure, and the solar cell structure further including a cover configured to cover at least a region from an end portion of the support surface on a lower side in an inclination direction to a predetermined portion on the solar cell panel.

## Description

### TECHNICAL FIELD

The present invention relates to a solar cell structure and a method for preventing snow piling onto a solar cell structure.

### BACKGROUND ART

A solar cell panel is usually installed outdoors while being supported by a mount in an inclined state.

Such a solar cell panel installed outdoors has a problem that the power generation efficiency is decreased when the solar cell panel is covered with snow.

### CITATION LIST

### PATENT LITERATURE

Patent Literature 1: JP-A-2017-103979

### SUMMARY OF INVENTION

### TECHNICAL PROBLEM

In particular, when snow is accumulated (snow is piled) in the vicinity of a lower end of a solar cell panel, a frame, or a mount in an inclination direction, the snow is prevented from slipping down, and thus the power generation efficiency is reduced over a long period of time. Thus, in order to prevent a decrease in power generation efficiency due to snow, it is important to prevent snow piling in the vicinity of the lower end in the inclination direction.

Patent Literature 1 discloses a device for preventing snow piling that prevents snow piling by filling a step between a solar cell panel and a frame on a lower end side in an inclination direction. However, in Patent Literature 1, a space between a frame and a mount is not considered, and thus snow may be accumulated in this portion. In addition, the device for preventing snow piling is fixed to an inclined surface with an adhesive material, and it may be difficult to replace the device for preventing snow piling in the case of material deterioration.

The present invention has been made in view of the above circumstances, and an object of the present invention is to provide a solar cell structure that can further prevent snow piling onto a solar cell panel.

### SOLUTION TO PROBLEM

The first solar cell structure according to the present invention is a solar cell structure comprising, a panel structure comprising a solar cell panel and a mount configured to support the panel structure in an inclined state, wherein the mount has a support surface that supports the panel structure, and the solar cell structure further comprising a cover configured to cover at least a region from an end portion of the support surface on a lower side in an inclination direction to a predetermined portion on the solar cell panel.

The second solar cell structure according to the present invention is a solar cell structure comprising a panel structure comprising a solar cell panel and a mount configured to support the panel structure in an inclined state, and the solar cell structure further comprising a cover configured to cover at least an end surface of the panel structure on a lower side in an inclination direction.

In one embodiment of the solar cell structure according to the present invention, the cover may further cover an end surface of the mount on a lower side in the inclination direction.

In one embodiment of the solar cell structure according to the present invention, the panel structure further comprises a frame, and the solar cell panel may be fixed to the mount with the frame.

In one embodiment of the solar cell structure according to the present invention, the frame comprises a protruding portion that protrudes more than the solar cell panel to an upper side in a direction perpendicular to an inclined surface at an end portion on a lower side in the inclination direction, and the cover may cover the protruding portion.

In one embodiment of the solar cell structure according to the present invention, the cover may be detachably attached to the solar cell structure.

In one embodiment of the solar cell structure according to the present invention, the cover further comprises a hook portion, and the hook portion may be attached by being hooked on a predetermined portion of the solar cell structure.

In one embodiment of the solar cell structure according to the present invention, the cover further comprises a fitting portion, and the fitting portion may be attached by being fitted into a predetermined portion of the solar cell structure.

In one embodiment of the solar cell structure according to the present invention, the cover may have a sheet shape.

In one embodiment of the solar cell structure according to the present invention, the cover may have oil-bleed property.

In one embodiment of the solar cell structure according to the present invention, the cover may comprise an oil-containing layer.

The first method for preventing snow piling onto a solar cell structure according to the present invention is a method for preventing snow piling onto a solar cell structure, the solar cell structure including a panel structure including a solar cell panel, and a mount configured to support the panel structure in an inclined state, the mount comprising a support surface that supports the panel structure, and the method comprising covering a region from an end portion of the support surface on a lower side in an inclination direction to a predetermined portion on the solar cell panel with a cover.

The second method for preventing snow piling onto a solar cell structure according to the present invention is a method for preventing snow piling onto a solar cell structure, the solar cell structure including a panel structure including a solar cell panel, and a mount configured to support the panel structure in an inclined state, and the method comprising covering an end surface of the panel structure on a lower side in an inclination direction with a cover.

In one embodiment of the method for preventing snow piling onto a solar cell structure according to the present invention, an end surface of the mount on a lower side in the inclination direction may be further covered with the cover.

In one embodiment of the method for preventing snow piling onto a solar cell structure according to the present invention, the panel structure further comprises a frame, and the solar cell panel may be fixed to the mount with the frame.

In one embodiment of the method for preventing snow piling onto a solar cell structure according to the present invention, the frame comprises a protruding portion that protrudes more than the solar cell panel to an upper side in a direction perpendicular to an inclined surface at an end portion on a lower side in the inclination direction, and the cover may cover the protruding portion.

In one embodiment of the method for preventing snow piling onto a solar cell structure according to the present invention, the cover may have a sheet shape.

In one embodiment of the method for preventing snow piling onto a solar cell structure according to the present invention, the cover may have oil-bleed property.

### ADVANTAGEOUS EFFECTS OF INVENTION

The solar cell structure according to the present invention allows for sufficiently preventing snow piling onto the solar cell panel.

### BRIEF DESCRIPTION OF DRAWINGS

FIG. 1 is a schematic perspective view illustrating an example of the first solar cell structure according to the present invention.
FIG. 2 is a schematic side view illustrating the example of the first solar cell structure according to the present invention.
FIG. 3 is an enlarged view illustrating a periphery of an end portion of the example of the first solar cell structure according to the present invention on a lower side in an inclination direction.
FIG. 4 is a cross-sectional view taken along a line A-A in FIG. 3.
   (a) of FIG. 5 is a schematic side view illustrating the example of the first solar cell structure according to the present invention, and (b) of FIG. 5 is an enlarged view of a part of panel structures adjacent to each other in the inclination direction in (a) of FIG. 5.
FIG. 6 is a cross-sectional view of a vicinity of a lower end in an inclination direction of a first modification of the first solar cell structure according to the present invention.
FIG. 7 is a cross-sectional view of a vicinity of a lower end in the inclination direction of a second modification of the first solar cell structure according to the present invention.
FIG. 8 is a cross-sectional view of a vicinity of a lower end in the inclination direction of a third modification of the first solar cell structure according to the present invention.
FIG. 9 is a cross-sectional view of a vicinity of a lower end in the inclination direction of a fourth modification of the first solar cell structure according to the present invention.
FIG. 10 is a cross-sectional view of a vicinity of a lower end in the inclination direction of a fifth modification of the first solar cell structure according to the present invention.
FIG. 11 is a cross-sectional view of a vicinity of a lower end in the inclination direction of a sixth modification of the first solar cell structure according to the present invention.
FIG. 12 is a schematic perspective view illustrating an example of a second solar cell structure according to the present invention.
   (a) of FIG. 13 is a cross-sectional view taken along a line B-B in FIG. 12, and (b) of FIG. 13 is an enlarged cross-sectional view illustrating a vicinity of a lower end of (a) of FIG. 13 in the inclination direction.
FIG. 14 is a sectional view of a vicinity of a lower end in the inclination direction illustrating an example of the second solar cell structure according to the present invention.
FIG. 15 is a schematic view of a solar cell structure used in Examples.

### DESCRIPTION OF EMBODIMENTS

Hereinafter, embodiments of the present invention will be described in detail with reference to the drawings. The present invention is not limited to the embodiments to be described below. In the following drawings, members/parts that perform the same function may be described with the same reference numerals, and duplicate description may be omitted or simplified. The embodiments described in the drawings are schematized for the purpose of clearly explaining the present invention, and do not necessarily accurately represent the size or scale.

### [First Solar Cell Structure]

A first solar cell structure according to an embodiment of the present invention is a solar cell structure including, a panel structure comprising a solar cell panel and a mount configured to support the panel structure in an inclined state. The mount has a support surface that supports the panel structure, and the solar cell structure further includes a cover configured to cover at least a region from an end portion of the support surface on a lower side in an inclination direction to a predetermined portion on the solar cell panel Hereinafter, the first solar cell structure according to the embodiment of the present invention will be described.

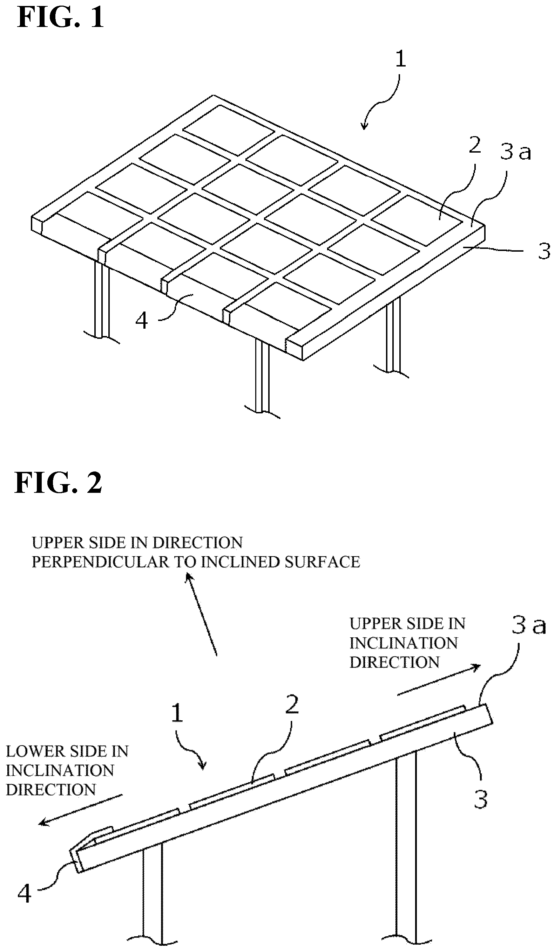

FIGs. 1 and 2 are schematic views illustrating an example of a solar cell structure according to the present embodiment. FIG. 1 is a perspective view and FIG. 2 is a side view. A solar cell structure 1 according to the present embodiment includes a panel structure 2 including a solar cell panel, and a mount 3 configured to support the panel structure 2 in an inclined state. The solar cell structure according to the present embodiment further includes a cover 4 for preventing snow piling onto the solar cell panel.

In the following description, as shown in FIG. 2, a direction along an inclined surface of the panel structure 2 may be referred to as an "inclination direction", and an upper side in the direction may be referred to as an "upper side in an inclination direction" and a lower side in the direction may be referred to as a "lower side in an inclination direction". Further, a direction perpendicular to the inclined surface of the panel structure 2 may be referred to as a "direction perpendicular to an inclined surface", and an upper side in the direction may be referred to as an "upper side in a direction perpendicular to an inclined surface" and a lower side in the direction may be referred to as a "lower side in a direction perpendicular to an inclined surface".

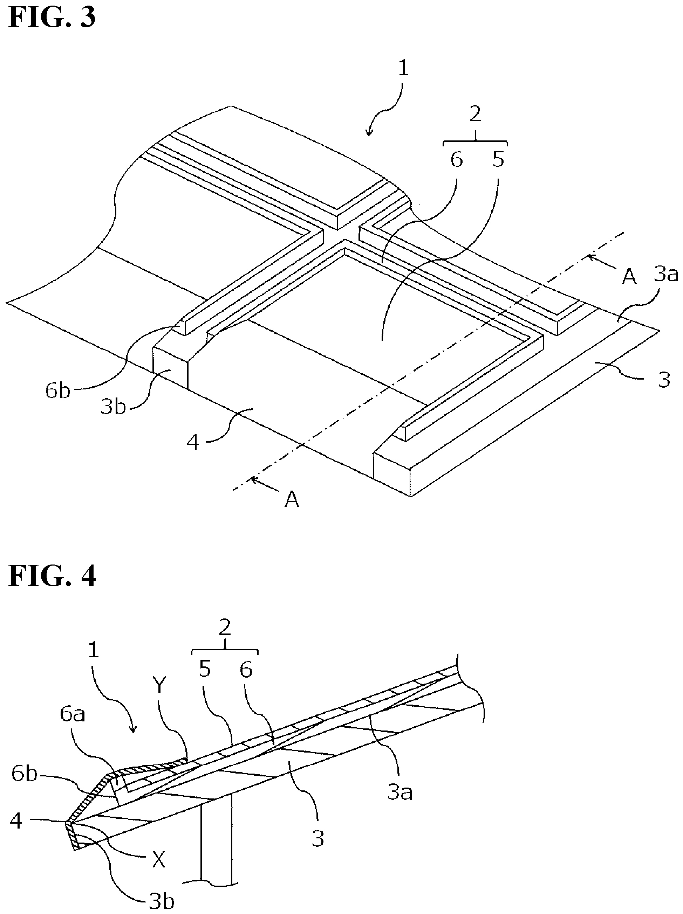

FIG. 3 is an enlarged view illustrating a periphery of an end portion of the examples shown in FIGs. 1 and 2 of the solar cell structures 1 on the lower side in the inclination direction. FIG. 4 is a cross-sectional view taken along a line A-A in FIG. 3.

The panel structure 2 in the present embodiment includes a solar cell panel 5. As shown in FIG. 3, the panel structure 2 may further include a frame 6, and the solar cell panel may be fixed to the mount 3 with the frame 6. The panel structure 2 may not include the frame 6. The first solar cell structure 1 according to the present embodiment may include a plurality of panel structures 2, or may include only one panel structure 2.

A type and a size of the solar cell panel 5 in the present embodiment are not limited, and a known solar cell panel can be appropriately used depending on a place of installation and application. The solar cell panel 5 is disposed such that a light collecting surface that receives light and generates power faces an upper side in a direction perpendicular to the inclined surface. When the panel structure 2 includes the frame 6, only one solar cell panel 5 may be attached to one frame 6, or a plurality of solar cell panels 5 may be attached to one frame 6.

When the panel structure 2 includes the frame 6, a shape of the frame 6 is not limited, but usually the frame 6 has a surface (mounting surface) on which the solar cell panel 5 is mounted. As shown in FIGs. 3 and 4, the frame 6 may include a protruding portion 6a that protrudes more than the solar cell panel to the upper side in the direction perpendicular to the inclined surface at an end portion (peripheral edge portion).

The mount 3 includes a support surface 3a that supports the panel structure 2. The support surface 3a is inclined with respect to a horizontal plane, and thus in the present embodiment, the panel structure 2 is supported in a state of being inclined with respect to the horizontal plane. An angle of the inclination is not limited, and may be appropriately adjusted according to the place of installation, the surrounding environment, and the like. A structure of the mount 3 is not limited, and a known mount for a solar cell structure can be appropriately used depending on the place of installation and the application. The mount 3 is attached to the place of installation such as a ground or a roof by a known means as appropriate.

The support surface 3a of the mount 3 may be formed to be slightly larger than the panel structure 2 (a panel structure group including a plurality of panel structures 2 when there is a plurality of panel structures 2). In this case, when the solar cell structure 1 is viewed from the upper side in the direction perpendicular to the inclined surface, the support surface 3a of the mount 3 extends to the lower side in the inclination direction more than an end surface 6b of the frame 6 on the lower side in the inclination direction, and snow is usually likely to be accumulated on this extending portion. The snow accumulated on this portion prevents the snow accumulated on the solar cell panel 5 from slipping down, and reduces the power generation efficiency over a long period of time.

In the case of snowstorm or the like, snow may land on the end surface 6b of the frame 6 on the lower side in the inclination direction or the end surface 3b of the mount 3 on the lower side in the inclination direction, and the snow may grow along the upper side in the inclination direction, for example. As described above, such a snow accretion may occur in both cases that the support surface 3a of the mount 3 extends to the lower side in the inclination direction more than the end surface 6b of the frame 6 on the lower side in the inclination direction and that the support surface 3a of the mount 3 does not extend. The snow accretion on these end surfaces also prevents the snow accumulated on the solar cell panel 5 from slipping down, thereby reducing the power generation efficiency over a long period of time.

Further, as described above, when the frame 6 includes the protruding portion 6a at the end portion (peripheral edge portion), a step is formed between the protruding portion and the solar cell panel 5. Therefore, snow is likely to pile up particularly on the step between the solar cell panel and the protruding portion at the end portion on the lower side in the inclination direction. As described above, such snow piling on the step may occur in both cases that the support surface 3a of the mount 3 extends to the lower side in the inclination direction more than the end surface 6b of the frame 6 on the lower side in the inclination direction and that the support surface 3a of the mount 3 does not extend. The snow accumulated on the step also prevents the snow accumulated on the solar cell panel 5 from slipping down, and reduces the power generation efficiency over a long period of time.

In the present embodiment, providing the cover 4 that covers at least a region from an end portion X of the support surface 3a on the lower side in the inclination direction to a predetermined portion Y on the solar cell panel allows for preventing the snow piling on an extended portion of the support surface 3a of the mount 3, the snow accretion on the end surfaces 6b and 3b of the frame 6 and the mount 3 on the lower side in the inclination direction, and the snow piling on the step between the protruding portion of the frame 6 on the lower side in the inclination direction and the solar cell panel 5. Hereinafter, the cover 4 will be described in detail.

A shape of the cover 4 is not limited, but is preferably a sheet shape as the cover 4 in a sheet shape is easy to transport and light in weight. A material used for the cover 4 is not limited, but examples thereof include a resin material such as a film and a rubber material, a metal, and a molded product thereof.

A method of attaching the cover 4 is not limited, and any method may be selected according to the shape and material of the cover 4. Examples of the method include a bonding method with an adhesive agent or an adhesive tape, and a locking method with a screw or the like. When the cover 4 is formed of an elastic material such as a rubber material, the cover 4 can be attached so that a portion from the end portion X of the support surface 3a on the lower side in the inclination direction to the predetermined portion Y on the solar cell panel is sandwiched by using an elastic force of the cover 4.

The cover 4 is preferably detachably attached to the solar cell structure. In more preferable embodiment of the cover 4, the cover 4 can be easily attached to and easily detached from the solar cell structure. In such an embodiment, the cover 4 can be easily replaced or repaired, or an oil-containing layer to be described later can be easily replaced.

Examples of the embodiment in which the cover can be easily attached and detached include an embodiment that a cover is attached to a solar cell structure by hooking a hook portion of the cover to be described later on a predetermined portion (for example, a protruding portion of a frame) of the solar cell structure.

The embodiment allows the cover to be easily attached by simply placing the cover, since the hook portion is hooked on the predetermined portion of the solar cell structure when the cover is attached. When the cover is removed, the cover can be easily removed simply by simply lifting the cover.

Examples of another embodiment in which the cover can be easily attached and detached include an embodiment that a cover is attached to a solar cell structure by fitting a fitting portion of the cover to be described later into a predetermined portion (for example, a protruding portion of a frame) of the solar cell structure.

The embodiment allows the cover to be easily attached by only fitting the fitting portion into the predetermined portion of the solar cell structure when the cover is attached . The predetermined portion of the solar cell structure is sandwiched by the entire fitting portion, and thus the cover can be held on the solar cell structure with an appropriate force and can be easily removed.

The embodiment allows the cover to be easily attached to the solar cell structure and to be easily removed without allowing the cover to adhere to the solar cell structure with an adhesive agent or an adhesive tape or locking the cover with a screw or the like. Also, in the embodiment, the cover may be attached to the solar cell structure by adhesion with an adhesive agent or an adhesive tape, locking with a screw or the like.

In another embodiment, the cover may be attached to the solar cell structure by a releasable adhesive agent, adhesive tape, or the like even when the cover does not have the hook portion or the fitting portion. The use of the releasable adhesive agent, adhesive tape or the like allows the cover to be easily attached to the solar cell structure and to be easily removed, since the adhesive agent, the adhesive tape, or the like can be released.

In the present embodiment, the cover 4 preferably has oil-bleed property. When the cover 4 has the oil-bleed property, the effect of preventing snow piling is particularly enhanced. The oil-bleed property refers to a property of holding oil and gradually releasing the oil to a surface. The surface of the cover 4 having the oil-bleed property is always kept in a state of being covered with the oil, and thus snow and ice are less likely to adhere to the surface. Therefore, the use of such a cover 4 allows for particularly preventing snow piling.

Examples of the embodiment in which the cover 4 has the oil-bleed property include an embodiment that the cover 4 includes an oil-containing layer on the surface thereof.

The oil-containing layer is obtained, for example, by coating, on the surface of the cover 4, a coating material obtained by mixing a resin precursor and an oil component, and curing the coating material. Alternatively, the oil-containing layer may be obtained by attaching a film in which an oil-containing layer formed of the coating material is formed on a base material such as a PET film to the surface of the cover 4.

In such a cover 4, the oil component gradually exudes to the surface thereof.

Examples of the resin precursor include thermosetting rubbers such as a dimethyl polysiloxane rubber.

Examples of the oil component include silicone oil, fluorine oil, hydrocarbon oil, polyether oil, ester oil, phosphorus compound oil, and mineral oil. Among these, silicone oil is preferable from the viewpoint of the effect of preventing snow and ice accretion and the bleeding effect. As the oil component, a single type of oil may be used, or a mixture of two or more types of oils may be used.

The oil component exudes to the surface of the oil-containing layer, so that the oil component in the oil-containing layer is gradually decreased, and the oil-bleed property is deteriorated over time. Thus, it is necessary to remove the cover 4 from the solar cell structure and replace the cover 4 or the oil-containing layer at any timing such as when the oil-bleed property is deteriorated. Therefore, when the cover 4 having the oil-bleed property is used, as described above, it is preferable embodiment that the cover 4 is detachable from the solar cell structure, and it is particularly preferable embodiment that the cover 4 can be easily attached to and detached from the solar cell structure.

In the present embodiment, when the solar cell structure 1 includes a plurality of panel structures 2 in the inclination direction, that is, when the solar cell structure 1 includes a plurality of rows of panel structures 2, the predetermined portion Y on the solar cell panel means a predetermined portion on the solar cell panel of the panel structure on the lowermost side in the inclination direction.

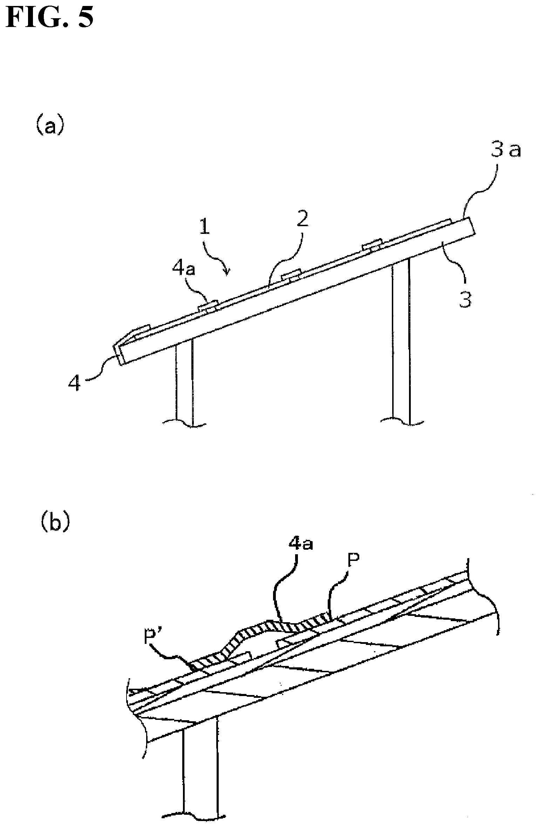

When the solar cell structure 1 includes the plurality of panel structures 2 in the inclination direction, as shown in (a) and (b) of FIG. 5, a cover 4a is preferably provided from a predetermined portion P on a lower end side of the panel structure on the upper side in the inclination direction to a predetermined portion P' on an upper end side of the panel structure on the lower side in the inclination direction, among the panel structures adjacent to each other in the inclination direction. That is, the cover 4a is preferably provided so as to cover a space (gap) between the panel structures adjacent to each other in the inclination direction. The predetermined portions P and P' may be predetermined portions on the solar cell panel as shown in (b) of FIG. 5, or may be predetermined portions on the frame (not shown) when the panel structure 2 has the frame. As shown in (a) of FIG. 5, the cover 4a may cover spaces (gaps) between the panel structures at a plurality of locations. The cover 4a may be the same as the cover 4 described above.

As a result, snow piling between the panel structures adjacent to each other in the inclination direction can be prevented, and snow slipping properties are further improved.

When the solar cell structure 1 includes a plurality of panel structures 2 in a direction parallel to the support surface 3a and perpendicular to the direction perpendicular to the inclined surface (that is, a direction perpendicular to a plane of paper in FIG. 2), that is, when the solar cell structure 1 includes a plurality of rows of panel structures 2, all rows of panel structures 2 preferably include the covers 4.

Hereinafter, a configuration of the cover will be described in more detail with reference to a modification according to the present embodiment.

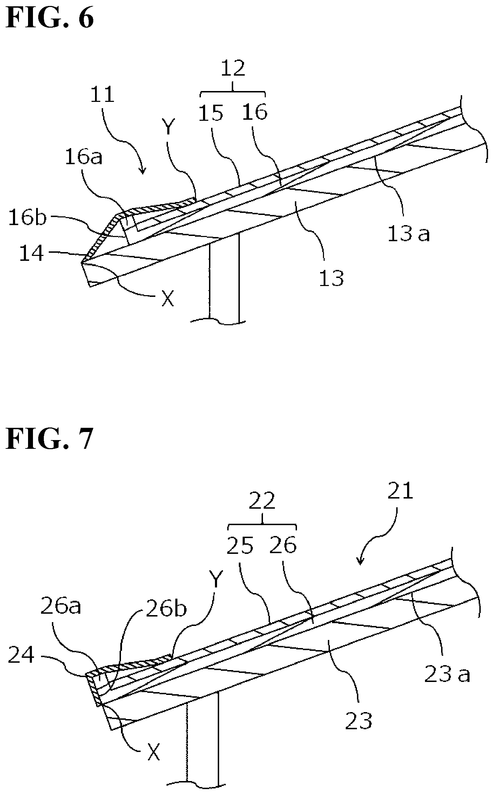

FIG. 6 shows a cross-sectional view of a vicinity of a lower end in the inclination direction of a solar cell structure 11 of a first modification according to the present embodiment. In the present embodiment, a cover 14 has a sheet shape.

An example shown in FIG. 6 is an example in which a support surface 13a of a mount 13 extends to a lower side in the inclination direction more than an end surface 16b of a frame 16 on the lower side in the inclination direction, and the cover 14 covers a region from the end portion X on the lower side of the support surface 13a in the inclination direction to the predetermined portion Y on a solar cell panel 15.

When the support surface 13a of the mount 13 extends to the lower side in the inclination direction more than the end surface 16b of the frame 16 on the lower side in the inclination direction as in the present example, snow tends to pile up on this portion. However, in this example, this portion is covered with the cover 14, and the inclination of the cover 14 that covers this portion is larger than the inclination of the support surface 13a, so that snow is less likely to be accumulated on this portion.

In the present example, the end surface 16b of the frame 16 on the lower side in the inclination direction is covered by the cover 14, and thus there is no possibility that snow will land on the end surface 16b even in the case of snowstorm or the like.

Further, in this example, the step between a protruding portion 16a of the frame 16 on the lower side in the inclination direction and the solar cell panel 15 is also covered with the cover 14, and thus snow is less likely to pile up on this step.

Therefore, in the configuration according to the present example, snow accumulated on the solar cell panel 15 is likely to slip down.

FIG. 7 shows a cross-sectional view of a vicinity of a lower end in the inclination direction of a solar cell structure 21 of a second modification according to the present embodiment. In the present embodiment, a cover 24 has a sheet shape.

An example shown in FIG. 7 is an example in which a support surface 23a of a mount 23 does not extend to the lower side in the inclination direction more than an end surface 26b of a frame 26 on the lower side in the inclination direction and the cover 24 covers a region from the end portion X of the support surface 23a on the lower side in the inclination direction to the predetermined portion Y on the solar cell panel 25.

Even when the support surface 23a of a mount 23 does not extend to the lower side in the inclination direction more than the end surface 26b of the frame 26 on the lower side in the inclination direction as in the present example, slipping down of snow accumulated on the solar cell panel 25 may be hindered by snow accretion on the end surface 26b of the frame 26 on the lower side in the inclination direction or snow piling onto the step between a protruding portion 26a of the frame 26 on the lower side in the inclination direction and the solar cell panel 25.

However, in the present example, the end surface 26b of the frame 26 on the lower side in the inclination direction is covered by the cover 24, and thus there is no risk of snow accretion on the end surface 26b even in the case of snowstorm or the like.

Further, in the present example, the step between the protruding portion 26a of the frame 26 on the lower side in the inclination direction and the solar cell panel 25 is also covered with the cover 24, and thus snow is less likely to be accumulated on this step.

Therefore, in the configuration according to the present example, snow accumulated on the solar cell panel 25 is likely to slip down.

In the example shown in FIG. 4, the cover 4 has a sheet shape.

An example shown in FIG. 4 is an example in which the support surface 3a of the mount 3 extends to the lower side in the inclination direction more than the end surface 6b of the frame 6 on the lower side in the inclination direction, the cover 4 covers a region from the predetermined portion Y on the solar cell panel 5 to the end portion X of the support surface 3a on the lower side in the inclination direction, and further covers the end surface 3b of the mount 3 on the lower side in the inclination direction.

With such a configuration, in addition to the effects of the first modification described above, snow accretion on the end surface 3b of the mount 3 on the lower side in the inclination direction is prevented, and thus this is particularly preferable.

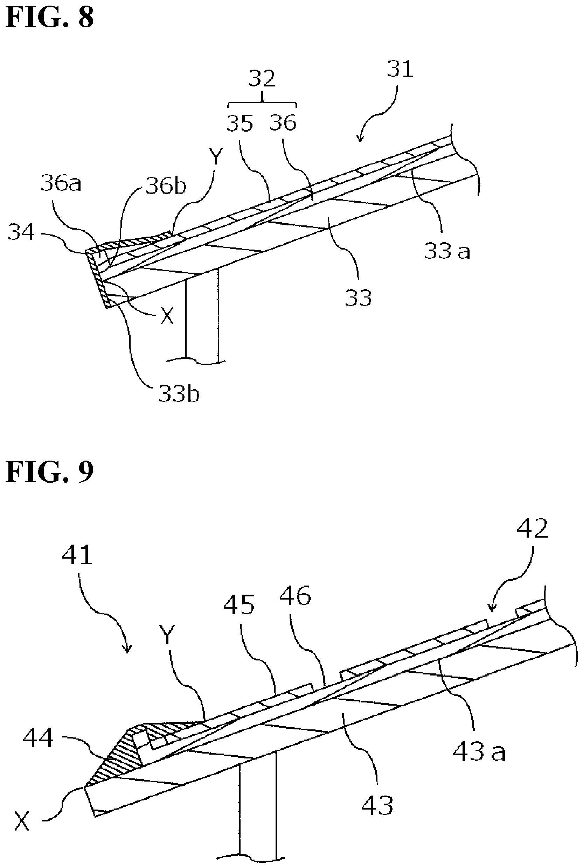

FIG. 8 shows a cross-sectional view of a vicinity of a lower end in the inclination direction of a solar cell structure 31 of a third modification according to the present embodiment. In the present embodiment, a cover 34 has a sheet shape.

An example shown in FIG. 8 is an example in which a support surface 33a of a mount 33 does not extend to a lower side in the inclination direction more than an end surface 36b of a frame 36 on the lower side in the inclination direction, a cover 34 covers a region from the predetermined portion Y on the solar cell panel 35 to the end portion X of the support surface 33a on the lower side in the inclination direction, and further covers an end surface 33b of the mount 33 on the lower side in the inclination direction.

With such a configuration, in addition to the effects of the second modification described above, snow accretion on the end surface 33b of the mount 33 on the lower side in the inclination direction is prevented, and thus this is particularly preferable.

The cover does not necessarily have to have a sheet shape. FIG. 9 shows a fourth modification using a cover that is not sheet-shaped. In the present modification, a cover 44 is a columnar member having a cross-sectional shape as shown in FIG. 9, and is disposed so as to cover a region from the end portion X of a support surface 43a on the lower side in the inclination direction to the predetermined portion Y on a solar cell panel 45.

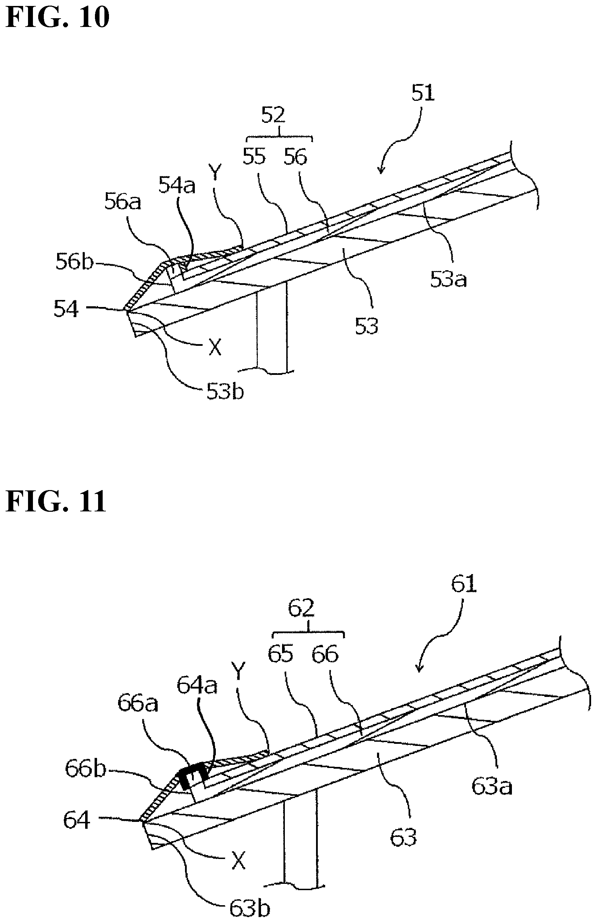

FIG. 10 shows a cross-sectional view of a vicinity of a lower end in the inclination direction of a solar cell structure 51 of a fifth modification according to the present embodiment. The modification is an example in which a cover 54 further includes a hook portion 54a in the first modification shown in FIG. 6. The cover 54 includes the hook portion 54a, and thus the cover can be hooked on a protruding portion 56a of the frame. The hook portion 54a is hooked on the protruding portion 56a of the frame and thus the cover 54 can be attached to the solar cell structure 51. Therefore, the cover 54 can be easily attached to and detached from the solar cell structure 51 without attaching the solar cell structure 51 with an adhesive agent or an adhesive tape or locking the solar cell structure 51 with a screw or the like.

FIG. 10 shows an example in which the support surface 53a of the mount 53 extends to the lower side in the inclination direction more than an end surface 56b of a frame 56 on the lower side in the inclination direction, and the cover 54 covers a region from the end portion X of the support surface 53a on the lower side in the inclination direction to the predetermined portion Y on the solar cell panel 55, but an embodiment of installation of the cover is not limited thereto. That is, as long as the cover 54 includes the hook portion 54a and is hooked on the protruding portion of the frame, the embodiment of installation of the cover is not limited. For example, as shown in FIGs. 4 and 8, the end surface of the mount on the lower side in the inclination direction may be covered, and as shown in FIGs. 7 and 8, the support surface of the mount may not extend to the lower side in the inclination direction more than the end surface of the frame on the lower side in the inclination direction.

Although the embodiment in which the hook portion 54a is hooked on the protruding portion 56a of the frame 56 has been described above, an object on which the hook portion 54a is hooked is not limited to the protruding portion 56a, and the hook portion 54a may be hooked on another member provided on the solar cell structure 51 as long as the effect of the present invention is not impaired.

FIG. 11 shows a cross-sectional view of a vicinity of a lower end in the inclination direction of a solar cell structure 61 of a sixth modification according to the present embodiment. This modification is an example in which a cover 64 further includes a fitting portion 64a in the first modification shown in FIG. 6. The cover 64 includes the fitting portion 64a, and thus the cover can be fitted to a protruding portion 66a of a frame. The cover 64 can be attached to the solar cell structure 61 by fitting the fitting portion 64a into the protruding portion 66a of the frame. The fitting portion 64a can be formed in accordance with a shape of the protruding portion 66a of the frame, and the cover 64 can be easily attached to the solar cell structure 61 without attaching the cover 64 with an adhesive agent or an adhesive tape or locking the cover 64 with a screw or the like. The predetermined portion of the solar cell structure 61 is sandwiched by the entire fitting portion 64a, and thus the cover 64 can be held on the solar cell structure 61 with an appropriate force and can be easily removed.

FIG. 11 shows an example in which a support surface 63a of a mount 63 extends to a lower side in the inclination direction more than an end surface 66b of a frame 66 on the lower side in the inclination direction, and the cover 64 covers a region from the end portion X of the support surface 63a on the lower side in the inclination direction to the predetermined portion Y on the solar cell panel 65, but an embodiment of installation of the cover is not limited thereto. That is, as long as the cover 64 includes the fitting portion 64a and is fitted into the protruding portion of the frame, the installation mode of the cover is not limited. For example, as shown in FIGs. 4 and 8, the end surface of the mount on the lower side in the inclination direction may be covered, and as shown in FIGs. 7 and 8, the support surface of the mount may not extend to the lower side in the inclination direction more than the end surface of the frame on the lower side in the inclination direction.

Although the embodiment in which the fitting portion 64a is fitted into the protruding portion 66a of the frame 66 has been described above, an object into which the fitting portion 64a is fitted is not limited to the protruding portion 66a, and the fitting portion 64a may be fitted into another member provided on the solar cell structure 61 as long as the effect of the present invention is not impaired.

### [First Method for Preventing Snow piling onto Solar Cell Structure]

A method for preventing snow piling onto a solar cell structure according to a first embodiment of the present invention (hereinafter, also simply referred to as a "method according to the first embodiment") is a method for preventing snow piling onto a solar cell structure, the solar cell structure including a panel structure including a solar cell panel, and a mount configured to support the panel structure in an inclined state, the mount comprising a support surface that supports the panel structure, and the method comprising covering a region from an end portion of the support surface on a lower side in an inclination direction to a predetermined portion on the solar cell panel with a cover..

The panel structure, the mount, the cover, the solar cell panel, and the frame in the method according to the first embodiment are the same as the panel structure, the mount, the cover, the solar cell panel, and the frame in the first solar cell structure according to the present embodiment described above.

### [Second Solar Cell Structure]

A second solar cell structure according to an embodiment of the present invention includes: a panel structure including a solar cell panel; and a mount configured to support the panel structure in an inclined state, and further includes a cover that covers at least an end surface of the panel structure on a lower side in an inclination direction. Hereinafter, the second solar cell structure according to the embodiment of the present invention will be described.

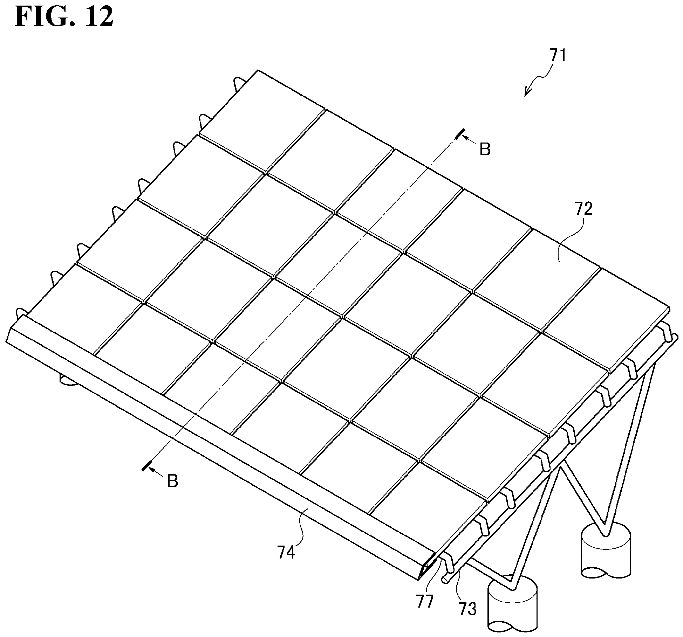

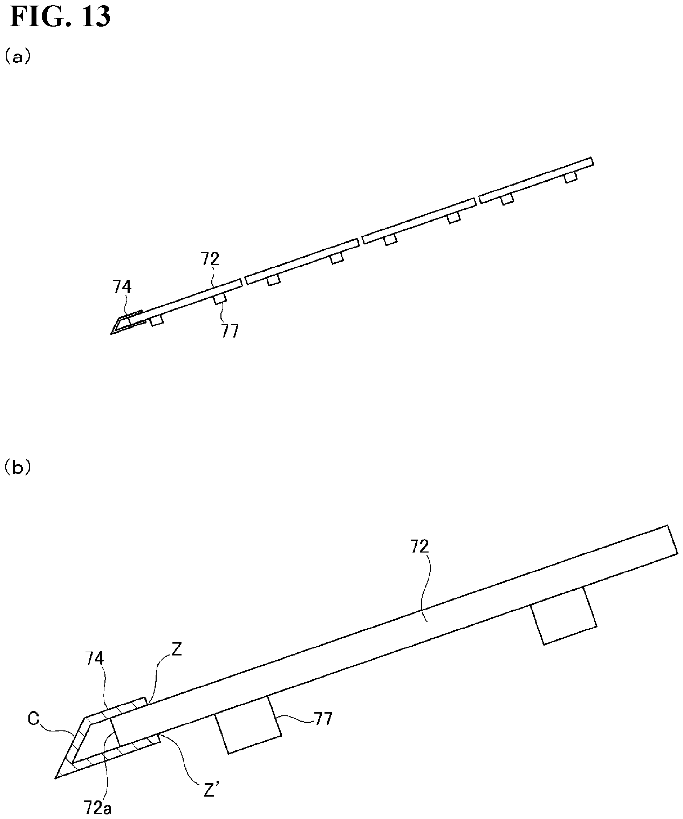

FIG. 12, (a) of FIG. 13 and (b) of FIG. 13 are schematic views illustrating an example of a second solar cell structure 71 according to the present embodiment. FIG. 12 is a perspective view, (a) of FIG. 13 is a cross-sectional view taken along a line B-B in FIG. 12, and (b) of FIG. 13 is an enlarged cross-sectional view of (a) of FIG. 13 in the lower side in the inclination direction. The solar cell structure 71 according to the present embodiment includes a panel structure 72 that includes a solar cell panel, and a mount 73 configured to support the panel structure 72 in an inclined state. The solar cell structure 71 according to the present embodiment further includes a cover 74 that covers at least an end surface 72a of the panel structure 72 on the lower side in the inclination direction so as to prevent snow piling onto the solar cell panel.

As shown in FIG. 12, (a) of FIG. 13 and (b) of FIG. 13, even when there is no step or the like on the panel structure 72, for example, when an inclination angle of the panel structure 72 is small, snow may land on the end surface 72a on the lower side in the inclination direction and the vicinity thereof, and the snow may grow along an upper side in the inclination direction, for example. Even in such a case, in the present embodiment, the end surface 72a of the panel structure 72 on the lower side in the inclination direction is covered with a cover 74, and thus the end surface 72a serves as a starting point of snow slip, and allows for preventing snow from landing or growing.

The panel structure 72 is the same as the panel structure described in the first solar cell structure. The panel structure may or may not include a frame.

The mount 73 includes a support member 77 that supports the panel structure 72. In FIG. 12, each of the panel structures 72 is supported by two rod-shaped support members, but a form thereof is not limited as long as the support member 77 may support the panel structure 72 in an inclined state. Therefore, a surface (support surface) may be formed in the same manner as described in the first solar cell structure, or the surface (support surface) may not be formed as in a ladder shape shown in FIG. 12, (a) of FIG. 13 and (b) of FIG. 13, for example.

The support member 77 is inclined with respect to a horizontal plane. Thus, in the present embodiment, the panel structure 72 is supported in a state of being inclined with respect to the horizontal plane. An angle of the inclination is not limited, and may be appropriately adjusted according to the place of installation, the surrounding environment, and the like. A structure of the mount 73 is not limited, and a known mount for a solar cell structure can be appropriately used depending on a place of installation and the application. The mount 73 is attached to a place of installation such as a ground or a roof by a known means as appropriate.

The cover 74 covers at least the end surface 72a of the panel structure 72 on the lower side in the inclination direction. A specific embodiment includes, for example, as shown in (b) of FIG. 13, an embodiment that the cover 74 is provided from a predetermined portion Z of a surface of the panel structure 72 on the upper side in the direction perpendicular to the inclined surface to a predetermined portion Z' of the surface of the panel structure 72 on the lower side in the direction perpendicular to the inclined surface, so that the end surface 72a is covered.

A shape of the cover 74 is not limited as long as the cover 74 covers the end surface 72a. For example, the end surface 72a may be covered with the sheet-shaped cover 74 as shown in (b) of FIG. 13, or the end surface 72a may be covered with the cover 74 formed of a columnar member as shown in FIG. 9. The cover 74 preferably has an inclined surface C as shown in (b) of FIG. 13 in order to easily cause snow slip. An inclination angle of the inclined surface C is preferably larger than an inclination angle of the panel structure 72 because the snow slip effect is enhanced.

The cover 74 covers at least the end surface 72a of the panel structure 72 on the lower side in the inclination direction, and this allows for preventing snow from landing on and growing on the end surface 72a of the panel structure 72 on the lower side in the inclination direction and the vicinity thereof. That is, even when there is no step or the like on the panel structure 72, snow is likely to accumulate on the end surface 72a on the lower side in the inclination direction and the vicinity thereof when the inclination angle of the panel structure 72 is small, but since the end surface 72a of the panel structure 72 on the lower side in the inclination direction is covered with the cover 74, the end surface 72a serves as a starting point of snow slipping, and this allows for preventing snow from landing or growing.

As the cover 74, the same cover as that described in the first solar cell structure can be used.

Hereinafter, a case where the panel structure of the second solar cell structure according to the embodiment of the present invention has a frame will be described with reference to an example.

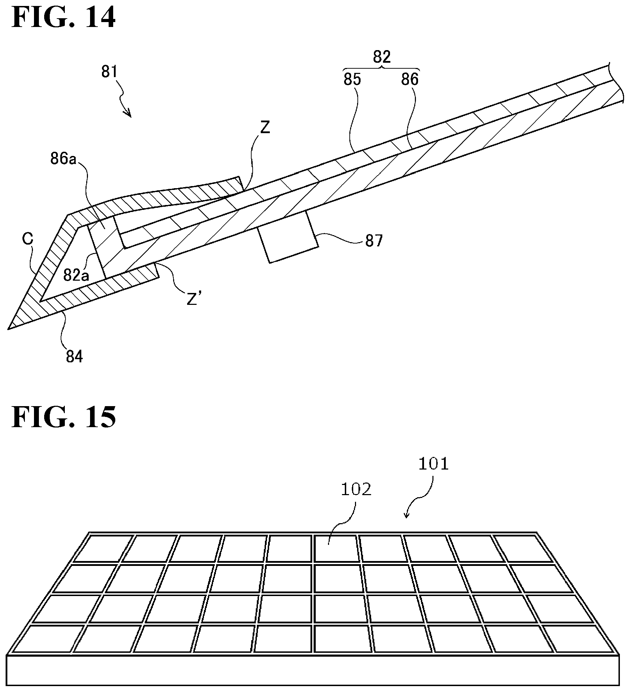

FIG. 14 shows a cross-sectional view of a vicinity of a lower end in the inclination direction of a second solar cell structure 81 according to the present embodiment. As shown in FIG. 14, the panel structure 82 is supported in an inclined state by a support member 87 provided on a mount. The panel structure 82 includes a solar cell panel 85 and a frame 86, and a lower surface of the frame 86 is supported by a support member 87.

The cover 84 is provided from the predetermined portion Z of a surface of the solar cell panel 85 on the upper side in the direction perpendicular to the inclined surface to the predetermined portion Z' of the lower surface of the frame 86 in the direction perpendicular to the inclined surface. Thus, the end surface 82a is covered with the cover 84. For example, when the cover 84 is formed of an elastic material such as a rubber material, the end surface 82a may be covered such that an upper side of the solar cell panel 85 and/or the frame 86 in the direction perpendicular to the inclined surface and a lower side of the frame 86 in the direction perpendicular to the inclined surface are sandwiched by using the elastic force of the cover 84. The cover 84 may be hooked to a protruding portion 86a of the frame by providing a hook portion as shown in FIG. 10, or may be fitted to the protruding portion 86a of the frame by providing a fitting portion as shown in FIG. 11, whereas the hook portion and fitting portion are not shown in FIG. 14.

The cover 84 covers the end surface 82a of the panel structure 82 on the lower side in the inclination direction, and this allows for preventing snow from landing on and growing on the end surface 82a of the panel structure 82 on the lower side in the inclination direction and the vicinity thereof. Further, the cover 84 has the inclined surface C having an inclination angle larger than an inclination angle of the panel structure 82, and thus the snow slipping effect is enhanced. The cover 84 has oil-bleed property as necessary, so that the effect of preventing snow piling can be further improved.

As shown in (a) of FIG. 5 and (b) of FIG. 5, when the solar cell structure 81 includes a plurality of panel structures 82 in the inclination direction, a cover may be further provided from a predetermined portion on a lower end side of the panel structure on the upper side in the inclination direction to a predetermined portion on an upper end side of the panel structure on the lower side in the inclination direction, among the panel structures adjacent to each other in the inclination direction. As a result, accumulation of snow between the panel structures adjacent to each other in the inclination direction can be prevented, and the effect of preventing snow piling can be further improved.

### [Method for Preventing Snow piling onto Second Solar Cell Structure]

A method for preventing snow piling onto a solar cell structure according to a second embodiment of the present invention (hereinafter, also simply referred to as a "method according to the second embodiment") is a method for preventing snow piling onto a solar cell structure, the solar cell structure including a panel structure including a solar cell panel, and a mount configured to support the panel structure in an inclined state, and the method comprising covering an end surface of the panel structure on a lower side in an inclination direction with a cover.

The panel structure, the mount, the cover, and the solar cell panel in the method according to the second embodiment are the same as the panel structure, the mount, the cover, and the solar cell panel in the second solar cell structure according to the present embodiment described above.

### [Example 1]

Hereinafter, the present invention will be specifically described with reference to examples, but the present invention is not limited to the examples.

### (Example 1)

In a solar cell structure 101 having a panel structure 102 of 4 rows × 8 columns or more as shown in FIG. 15, a panel structure on the lowermost row in an inclination direction in the rightmost column from the lower side in the inclination direction was covered with a cover as shown in FIG. 4. As the cover, a sheet A having oil-bleed property and manufactured as described below was used. The panel structure was covered such that an oil-containing resin layer of the sheet A was on an outer side.

### (Method for Manufacturing Sheet A)

A thermosetting dimethyl polysiloxane rubber (KE-1950-A/B, manufactured by Shin-Etsu Chemical Co., Ltd.) was prepared as a resin precursor, a dimethyl siloxane oil (KF-96-50CS, manufactured by Shin-Etsu Chemical Co., Ltd.) was prepared as a first oil component, and a methyl phenyl siloxane oil (TSF437, manufactured by Momentive Performance Materials Inc.) was prepared as a second oil component. These were stirred until these reached a uniform consistency to obtain a coating material.

A blending proportion of the resin precursor, the first oil component, and the second oil component was adjusted so that the resin component was 40% by mass, the first oil component was 36% by mass, and the second oil component was 24% by mass in the finally obtained oil-containing resin layer.

The obtained coating material was applied onto an ionomer film (Himilan 1855, manufactured by Du Pont-Mitsui Co., Ltd. and KURABO Co., Ltd.) and the applied one was cured by heating for 10 minutes in a 150°C environment to obtain a sheet in which an oil-containing resin layer having a thickness of about 250 µm was formed on the film. Further, an adhesive agent (CS9862, manufactured by Nitto Denko Corporation) was attached to an ionomer film side of the sheet so as to be bondable to an adherend, whereby the sheet A was obtained.

### (Example 2)

In the solar cell structure, a panel structure in the lowermost row in the inclination direction in a second column from the right from the lower side in the inclination direction was not covered.

### (Example 3)

In the solar cell structure, a panel structure in the lowermost row in the inclination direction in a third column from the right from the lower side in the inclination direction was covered with a cover as shown in FIG. 4. As the cover, a sheet B having a configuration in which an adhesive agent was allowed to bond to a urethane resin sheet ("URS-II # 10" (trade name) manufactured by Nihon Matai Co., Ltd., thickness: 0.1 mm) in the same manner as in the sheet A so as to be bondable to an adherend was used.

### (Example 4)

In the solar cell structure, a panel structure in the lowermost row in the inclination direction in a fourth column from the right from the lower side in the inclination direction was covered with a cover as shown in FIG. 4. As the cover, a sheet C having a configuration in which an adhesive agent was allowed to bond to a PET film (LUMIRROR 125S10, thickness 125 µm, manufactured by Toray Industries, Inc.) in the same manner as in the sheet A so as to be bondable to an adherend was used.

### (Example 5)

In the solar cell structure, a panel structure in the lowermost row in the inclination direction in a fifth column from the right from the lower side in the inclination direction was covered with a cover as shown in FIG. 4. As the cover, a fluorine tape having an adhesive layer (NITOFLON, NO. 9030UL, manufactured by Nitto Denko Corporation) was used.

### (Example 6)

In the solar cell structure, a panel structure in the lowermost row in the inclination direction in a sixth column from the right from the lower side in the inclination direction was covered with a cover as shown in FIG. 4. As the cover, a sheet D having a configuration in which an adhesive agent was allowed to bond to an ionomer film (Himilan 1855, manufactured by Du Pont-Mitsui Co., Ltd., manufactured by KURABO CO., LTD.) in the same manner as in the sheet A so as to be bondable to an adherend was used.

### (Example 7)

In the solar cell structure, a panel structure in the lowermost row in the inclination direction in a seventh column from the right from the lower side in the inclination direction was not covered.

### (Verification of Performance of Snow Piling Prevention)

The solar cell structure was installed outdoors and the state of snow sliding was observed. The snow that had fallen on the solar cell structure was sliding down in rows in Examples 1, 3 to 6. On the other hand, in columns in Examples 2 and 7, snow falling on the solar cell structure did not slip down.

The present application is based on Japanese Patent Application No. 2019-065070 filed on March 28, 2019, the contents of which are incorporated herein by reference.

### REFERENCE SIGNS LIST

1, 11, 21, 31, 41, 51, 61, 71, 81, 101: Solar cell structure
2, 12, 22, 32, 42, 52, 62, 72, 82, 102: Panel structure
3, 13, 23, 33, 43, 53, 63, 73: Mount
3a, 13a, 23a, 33a, 43a, 53a, 63a: Support surface
3b, 33b, 53b, 63b: End surface of mount on lower side in inclination direction
4, 4a, 14, 24, 34, 44, 54, 64, 74, 84: Cover
54a: Hook Portion
64a: Fitting Portion
5, 15, 25, 35, 45, 55, 65, 85: Solar cell panel
6, 16, 26, 36, 46, 56, 66, 86: Frame
6a, 16a, 26a, 36a, 56a, 66a, 86a: Protruding portion
6b, 16b, 26b, 36b, 56b, 66b: End surface of frame on lower side in inclination direction
72a, 82a: End surface of panel structure on lower side in inclination direction
77, 87: Support member
X: End portion of support surface on lower side in inclination direction
Y: Predetermined portion on solar cell panel
Z: Predetermined portion of surface of panel structure on upper side in direction perpendicular to inclined surface
Z': Predetermined portion of surface of panel structure on lower side in direction perpendicular to inclined surface

## Claims

1. A solar cell structure comprising:
a panel structure comprising a solar cell panel; and
a mount configured to support the panel structure in an inclined state,
wherein the mount has a support surface that supports the panel structure,
and the solar cell structure further comprising:
a cover configured to cover at least a region from an end portion of the support surface on a lower side in an inclination direction to a predetermined portion on the solar cell panel.

2. A solar cell structure comprising:
a panel structure comprising a solar cell panel; and
a mount configured to support the panel structure in an inclined state,
and the solar cell structure further comprising:
a cover configured to cover at least an end surface of the panel structure on a lower side in an inclination direction.

3. The solar cell structure according to claim 1, wherein the cover further covers an end surface of the mount on a lower side in the inclination direction.

4. The solar cell structure according to any one of claims 1 to 3, wherein the panel structure further comprises a frame, and the solar cell panel is fixed to the mount with the frame.

5. The solar cell structure according to claim 4, wherein the frame comprises a protruding portion that protrudes more than the solar cell panel to an upper side in a direction perpendicular to an inclined surface at an end portion on a lower side in the inclination direction, and the cover covers the protruding portion.

6. The solar cell structure according to any one of claims 1 to 5, wherein the cover is detachably attached to the solar cell structure.

7. The solar cell structure according to claim 6, wherein the cover further comprises a hook portion, and the hook portion is attached by being hooked on a predetermined portion of the solar cell structure.

8. The solar cell structure according to claim 6, wherein the cover further comprises a fitting portion, and the fitting portion is attached by being fitted into a predetermined portion of the solar cell structure.

9. The solar cell structure according to any one of claims 1 to 8, wherein the cover has a sheet shape.

10. The solar cell structure according to any one of claims 1 to 9, wherein the cover has oil-bleed property.

11. The solar cell structure according to claim 10, wherein the cover comprises an oil-containing layer.

12. A method for preventing snow piling onto a solar cell structure, the solar cell structure including a panel structure including a solar cell panel, and a mount configured to support the panel structure in an inclined state, the mount comprising a support surface that supports the panel structure, and the method comprising:
covering a region from an end portion of the support surface on a lower side in an inclination direction to a predetermined portion on the solar cell panel with a cover.

13. A method for preventing snow piling onto a solar cell structure, the solar cell structure including a panel structure including a solar cell panel, and a mount configured to support the panel structure in an inclined state, and the method comprising:
covering an end surface of the panel structure on a lower side in an inclination direction with a cover.

14. The method for preventing snow piling onto a solar cell structure according to claim 12, wherein an end surface of the mount on a lower side in the inclination direction is further covered with the cover.

15. The method for preventing snow piling onto a solar cell structure according to any one of claims 12 to 14, wherein the panel structure further comprises a frame, and the solar cell panel is fixed to the mount with the frame.

16. The method for preventing snow piling onto a solar cell structure according to claim 15, wherein the frame comprises a protruding portion that protrudes more than the solar cell panel to an upper side in a direction perpendicular to an inclined surface at an end portion on a lower side in the inclination direction, and the cover covers the protruding portion.

17. The method for preventing snow piling onto a solar cell structure according to any one of claims 12 to 16, wherein the cover has a sheet shape.

18. The method for preventing snow piling onto a solar cell structure according to any one of claims 12 to 17, wherein the cover has oil-bleed property.
